# EUROPÄISCHE PATENTANMELDUNG

(11) **EP 3 309 415 A1**
(43) Veröffentlichungstag der Anmeldung: **18.04.2018**
(21) Anmeldenummer: 17193875.6
(22) Anmeldetag: 28.09.2017
(51) Int. Cl.: F16B 37/06

(54) **EIN NIETELEMENT SOWIE EIN ZUSAMMENBAUTEIL BESTEHEND AUS EINEM NIETELEMENT UND EINEM BLECHTEIL**

(30) Priorität: 12.10.2016 DE 102016119478
(71) Anmelder: Profil Verbindungstechnik GmbH & Co. KG, 61381 Friedrichsdorf (DE)
(72) Erfinder: Humpert, Richard, 61231 Bad Nauheim (DE); Sowa, Christian, 63165 Mühlheim/Main (DE)
(74) Vertreter: Manitz Finsterwald Patentanwälte PartmbB

(57) **Zusammenfassung**

Ein Nietelement mit einer mittleren Längsrichtung mit einem eine Blechanlagefläche aufweisenden Kopfteil und mit einem Verdrehsicherungsmerkmale aufweisenden zylindrischen Nietabschnitt, zeichnet sich dadurch aus, dass die Verdrehsicherungsmerkmale durch parallel zur mittleren Längsrichtung verlaufende Kerben an der äußeren Mantelfläche des zylindrischen Nietabschnitts gebildet sind, die sich über zumindest im Wesentlichen die gesamte Länge des Nietabschnitts erstrecken. Hierdurch wird durch das entsprechende Zusammenbauteil bestehend aus einem Blechteil, an dem das Nietelement angenietet ist, ein überraschend höherer Verdrehsicherungswiderstand erreicht.

## Beschreibung

Die vorliegende Erfindung betrifft ein Nietelement sowie ein Zusammenbauteil bestehend aus einem Nietelement und einem Blechteil.

Es sind eine Reihe von Nietelementen bekannt, die eine mittlere Längsrichtung mit einem eine Blechanlagefläche aufweisendes Kopfteil und einen Verdrehsicherungsmerkmale aufweisenden zylindrischen Nietabschnitt aufweisen. Beispiele für solche Nietelemente und die entsprechenden Zusammenbauteile sind der EP-1806509-B zu entnehmen. Dort sind eine Reihe von Verdrehsicherungsmerkmalen in der Form von Erhebungen an den Nietabschnitten der gezeigten Elemente beschrieben, die alle die Aufgabe haben, das Blechmaterial durch eine besondere Formgebung des Stanz- und/oder Nietabschnitts so mitzunehmen, dass das zurückgefaltete Blech im Bereich des Nietbördels vollständig vom Nietabschnitt abgedeckt wird, wodurch es nicht mehr möglich ist, dass Teile des Bleches als Span aus der Nietwulst herausragen oder gar abgelöst werden können.

Bei einigen der dort beschriebenen Ausführungsformen haben die Verdrehsicherungsmerkmale die Form von parallel zur mittleren Längsrichtung des Elements verlaufende Verdrehsicherungsrippen, die sich am Nietabschnitt bis zum feinen Ende des Nietabschnitts erstrecken. Ausführungen von Zusammenbauteilen bei denen das Blechmaterial im Bereich des Nietbördels an sich selbst zurückgefaltet ist, sind nicht unbedingt die übliche Art von Zusammenbauteilen. Häufig wird das Blechteil lediglich in einer zwischen einem Flansch des Nietelements und den Nietbördel bildenden Ringnut eingeklemmt. Bei den meisten Nietelementen sind die Verdrehsicherungsmerkmale durch Nasen oder Vertiefungen gebildet, die sich im Flansch des Elements befinden oder durch Nasen oder Rippen, die sich im Übergang vom Flansch in den Nietabschnitt befinden.

Aufgabe der vorliegenden Erfindung ist es, eine besondere Art von Verdrehsicherungsmerkmalen vorzusehen, die überraschenderweise zu einem deutlich erhöhten Verdrehsicherungswert bzw. -widerstand führen, der im Regelfall um mindestens 20% höher liegt als die bisher verwendeten Verdrehsicherungsmerkmale.

Zur Lösung dieser Aufgabe wird erfindungsgemäß vorgesehen, dass die Verdrehsicherungsmerkmale durch parallel zur mittleren Längsrichtung verlaufende Kerben an der äußeren Mantelfläche des zylindrischen Nietabschnitts gebildet sind.

Hierdurch wird erfindungsgemäß, ohne weitere Verdrehsicherungsmerkmale vorzusehen, üblicherweise ein Verdrehsicherungswiderstand erreicht, der um mindestens 20% höher liegt als bei einem entsprechenden Nietelement mit herkömmlichen Verdrehsicherungsmerkmalen. Eine solche Ausbildung ist auch nicht durch die bekannte Lösung gemäß der oben bezeichneten EP-1806509-B nahegelegt, denn dort wird ausschließlich von Verdrehsicherungsmerkmalen in der Form von Vorsprüngen gesprochen und es ist auch nicht ersichtlich, dass eine Realisierung der Verdrehsicherungsmerkmalen durch Kerben die erwünschte Wirkung der Blechmitnahme erzielen würde.

Die erfindungsgemäßen Kerben sollen sich vorzugsweise über zumindest im Wesentlichen die gesamte Länge des Nietabschnitts erstrecken. Das heißt, dass sie sich mindestens bis zu einem gerundeten Bereich des Nietabschnitts am freien Ende des Nietabschnitts, d.h. zu der üblichen gerundeten Ziehkante erstrecken sollen, wobei auch etwas kürzere Kerben durchaus vorstellbar sind, die dennoch zu einem erhöhten Verdrehsicherungswiderstand führen.

Die Kerben weisen vorzugsweise eine im Querschnitt gerundete Form auf, die insbesondere einem halbkreisförmigen Querschnitt entspricht. Durch diese gerundete Formgebung können unerwünschte Risse im Bereich des Nietbördels weitgehend vermieden und Ermüdungsrissen entgegengewirkt werden.

Besonders günstig ist es, wenn der zylindrische Nietabschnitt in den Bereichen zwischen den Kerben eine kreisrunde teilzylindrische Fläche aufweist.

Eine solche Formgebung fördert die Wirkung, die mit gerundeten Kerben angestrebt ist und ist zudem relativ leicht herzustellen.

Aufgrund der erfindungsgemäß erreichbaren Verdrehsicherungswerte ist es nicht erforderlich weitere Verdrehsicherungsmerkmale an der Blechanlagefläche vorzusehen, was die Herstellung des Nietelements vereinfacht und letztlich auch die Kosten des Zusammenbauteils senkt.

Falls erforderlich können aber an der Blechanlagefläche Verdrehsicherungsvertiefungen, insbesondere in etwa mit der Form einer nach außen gerichteten halbkreisförmigen Vertiefung vorgesehen werden, die an Winkelstellungen um die mittlere Längsachse herum angeordnet sind, die jeweils zwischen zwei benachbarten Kerben liegen. Hierdurch kann eine zusätzliche Verdrehsicherung erzielt werden.

Ferner besteht die Möglichkeit an der Blechanlagefläche Verdrehsicherungsnasen, insbesondere sich in radialer Richtung erstreckende Nasen vorzusehen, die an Winkelstellungen entsprechend den Winkelstellungen der Kerben angeordnet sind, d.h. mit diesen ausgerichtet sind. Hierdurch kann der Verdrehsicherungswiderstand weiter gesteigert werden. Darüber hinaus wird das Blechmaterial im Bereich der Nasen wellenförmig verformt, was auch den Verdrehsicherungswiderstand erhöht und zwar ohne das Blechmaterial örtlich in unzulässigem Umfang zu verdünnen, da das von den Nasen verdrängte Blechmaterial in die Kerben aufgenommen werden kann, die an den gleichen Winkelstellungen wie die Nasen liegen.

Es ist günstig wenn drei bis zwölf Kerben vorgesehen sind, weniger als drei Kerben führen nicht zu dem erwünschten Verdrehsicherungswiderstand und bei mehr als zwölf Kerben müssen diese tendenziell kleiner ausgeführt werden, was sich auch nachteilig auf den Verdrehsicherungswiderstand auswirken kann.

Die erfindungsgemäße Lösung kann mit Erfolg bei Nietelementen in der Form von Bolzenelementen angewandt werden, wobei es sich bei den Bolzenelementen um bekannte Bolzenelemente handeln kann, zum Beispiel nach Art eines SBF-Elements, eines SBF-Elements mit konusförmiger Blechanlagefläche oder eines NBR-Nietbolzens, die alle von Profilverbindungstechnik GmbH & Co. KG erhältlich sind oder vergleichbare bolzenartige Nietelemente von Wettbewerbern.

Alternativ hierzu kann die Erfindung mit Erfolg mit Nietelementen in der Form von Mutterelementen erfolgreich benutzt werden, zum Beispiel mit Mutterelementen nach Art eines RSF-Elements, eines RSN-Elements, eines RND-Elements oder eines EMF-Elements, die alle von Profilverbindungstechnik GmbH 6 Co. KG erhältlich sind oder mit vergleichbaren Mutterelementen von Wettbewerbern.

Ein erfindungsgemäßes Zusammenbauteil bestehend aus einem Blechteil an dem mindestens ein erfindungsgemäßes Nietelement befestigt ist, zeichnet sich dadurch aus, dass Blechmaterial an der Blechanlagefläche und am Nietabschnitt anliegt und sich im Eingriff mit den Kerben befindet.

Weiter bevorzugte Ausführungen der erfindungsgemäßen Zusammenbauteile sind den Unteransprüchen und der nachfolgenden Beschreibung von Ausführungsbeispielen bzw. der Zeichnung zu entnehmen.

In der Zeichnung zeigen:
- Fig. 1A - 1 F: Darstellungen eines erfindungsgemäß modifizierten SBF-Bolzenelements der Firma Profil Verbindungstechnik GmbH & Co. KG, und zwar in Fig. 1A in einer Seitenansicht in etwa in der Pfeilrichtung D in Fig. 1B,
in Fig. 1B in einer Stirnansicht der Fig. 1A von oben gesehen,
in Fig. 1C in einer Schnittzeichnung entsprechend der Schnittebene C-C der Fig. 1B,
in Fig. 1D in einer Schnittzeichnung entsprechend der Schnittebene D-D der Fig. 1B,
in Fig. 1E in einer Seitenansicht in etwa in der Pfeilrichtung C der Fig. 1B, und
in Fig. 1F in einer perspektivischen Darstellung,
- Fig. 2A - 2F: Darstellungen entsprechend den Fig. 1A bis 1F jedoch von einer Ausführungsform mit zusätzlichen Verdrehsicherungsmerkmalen im Bereich des Flansches, hier in der Form von Vertiefungen,
- Fig. 3A - 3F: Darstellungen entsprechend den Fig. 1A bis 1F jedoch von einer Ausführungsform mit zusätzlichen Verdrehsicherungsmerkmalen im Bereich des Flansches, hier in der Form von abwechselnden Vertiefungen und Nasen, wobei die Nasen winkelmäßig an Stellen vorgesehen sind, die mit den Kerben am Nietabschnitt ausgerichtet sind und die Vertiefungen je zwischen zwei Kerben am Nietabschnitt angeordnet sind,

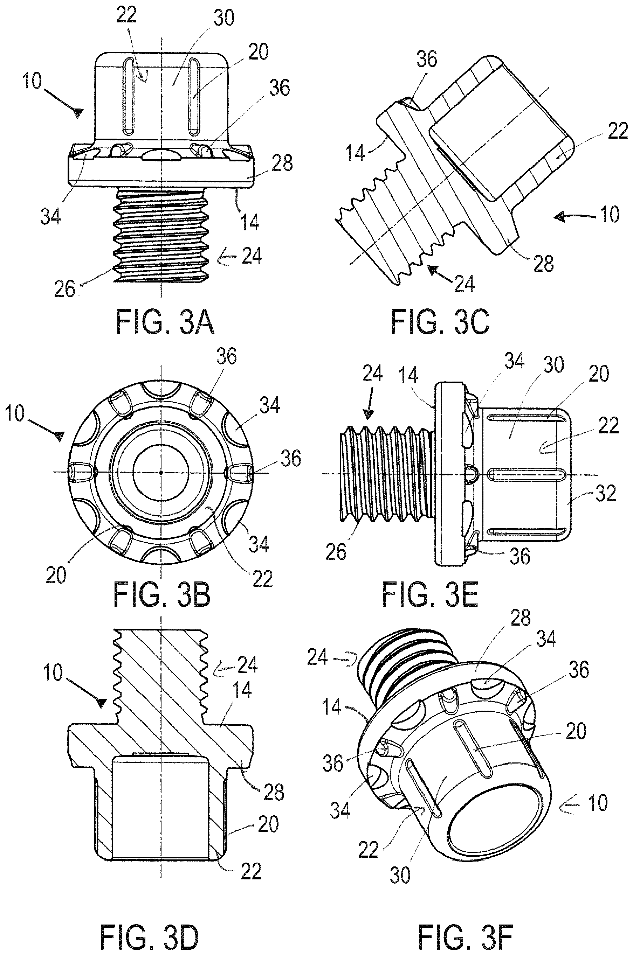

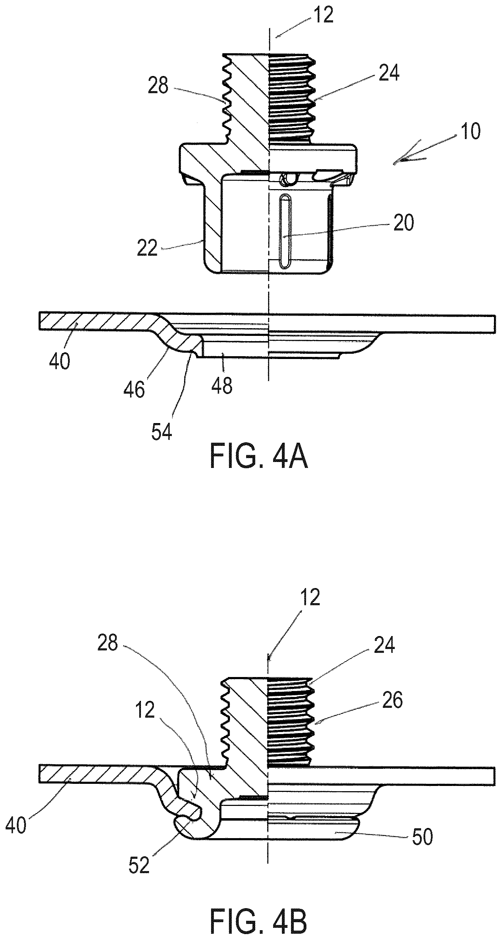

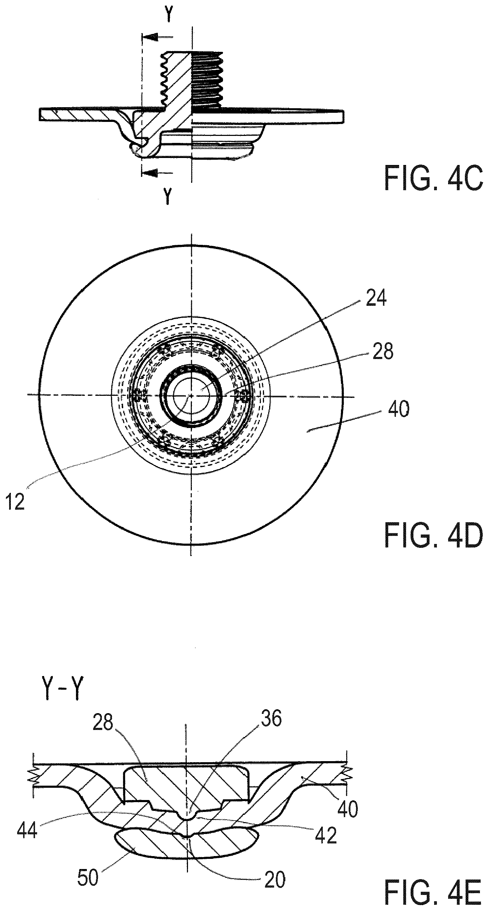

- Fig. 4A - 4E: eine Zeichnungsreihe, um die Anbringung des Nietelements gemäß den Fig. 3A - 3F an einem Blechteil zu erläutern, wobei Fig. 4A die Ausgangssituation mit dem Element oberhalb eines vorgelochten und mit Sicke versehenen Blechteils zeigt, die Fig. 4A eine teilweise geschnittene Ansicht des Zusammenbauteils, das bei der Vernietung des Nietelements am Blechteil entsteht, Fig. 4C die gleiche Zeichnung wie Fig. 4B jedoch mit Darstellung der Schnittebene Y-Y und in einem kleineren Maßstab, Fig. 4D eine Stirnansicht auf das Zusammenbauteil der Fig. 4B und 4C und Fig. 4E eine vergrößerte Darstellung entsprechend der Schnittebene Y-Y der Fig. 4C,
- Fig. 5A - 5F: Darstellungen eines erfindungsgemäß modifizierten NBR-Bolzenelements der Firma Profil Verbindungstechnik GmbH & Co. KG, wobei die Ansichten entsprechend den Zeichnungen der Fig. 1A bis 1F vorgenommen sind,
- Fig. 6A - 6F: Darstellungen entsprechend den Fig. 5A bis 5F, jedoch von einer Ausführungsform mit zusätzlichen Verdrehsicherungsmerkmalen im Bereich des Flansches, hier in der Form von Nasen, die winkelmäßig an Stellen vorgesehen sind, die mit den Kerben am Nietabschnitt ausgerichtet sind,
- Fig. 7A - 7F: Darstellungen entsprechend den Fig. 5A bis 5F, jedoch von einer Ausführungsform mit zusätzlichen Verdrehsicherungsmerkmalen im Bereich des Flansches, hier in der Form von Vertiefungen, die jeweils zwischen zwei Kerben am Nietabschnitt angeordnet sind,
- Fig. 8A - 8F: Darstellungen entsprechend den Fig. 5A bis 5F, jedoch von einer Ausführungsform mit zusätzlichen Verdrehsicherungsmerkmalen im Bereich des Flansches, hier in der Form von abwechselnden Vertiefungen und Nasen, wobei die Nasen winkelmäßig an Stellen vorgesehen sind, die mit den Kerben am Nietabschnitt ausgerichtet sind und die Vertiefungen jeweils zwischen zwei Kerben am Nietabschnitt angeordnet sind,
- Fig. 9A - 9E: eine Zeichnungsreihe, um die Anbringung des Nietelements gemäß den Fig. 6A - 6F an einem Blechteil zu erläutern, wobei die Ansichten entsprechend den Zeichnungen der Fig. 1A bis 1F vorgenommen sind,
- Fig. 10A - 10F: Darstellungen einer erfindungsgemäß modifizierten RSF-Nietmutter der Firma Profil Verbindungstechnik GmbH & Co. KG, wobei die Ansichten entsprechend den Zeichnungen der Fig. 1A bis 1F vorgenommen sind,
- Fig. 11A - 11 F: Darstellungen einer erfindungsgemäß modifizierten RSN-Nietmutter der Firma Profil Verbindungstechnik GmbH & Co. KG, die der RSF-Nietmutter sehr ähnlich ist, wobei die Ansichten entsprechend den Zeichnungen der Fig. 1A bis 1F vorgenommen sind,
- Fig. 12A - 12F: Darstellungen entsprechend den Fig. 10A bis 10F, jedoch von einer Ausführungsform mit zusätzlichen Verdrehsicherungsmerkmalen im Bereich des Flansches, hier in der Form von Nasen, die winkelmäßig an Stellen vorgesehen sind, die mit den Kerben am Nietabschnitt ausgerichtet sind,

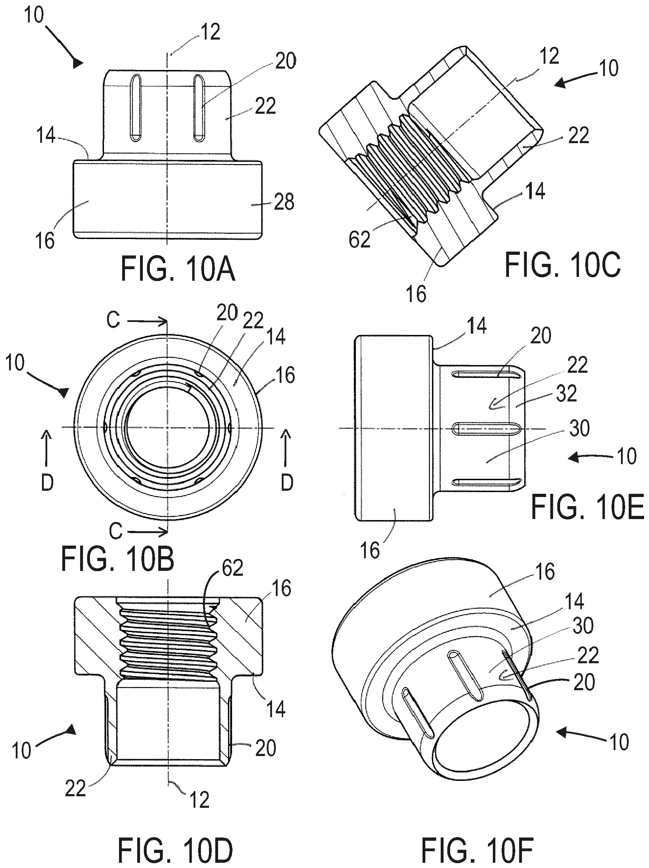

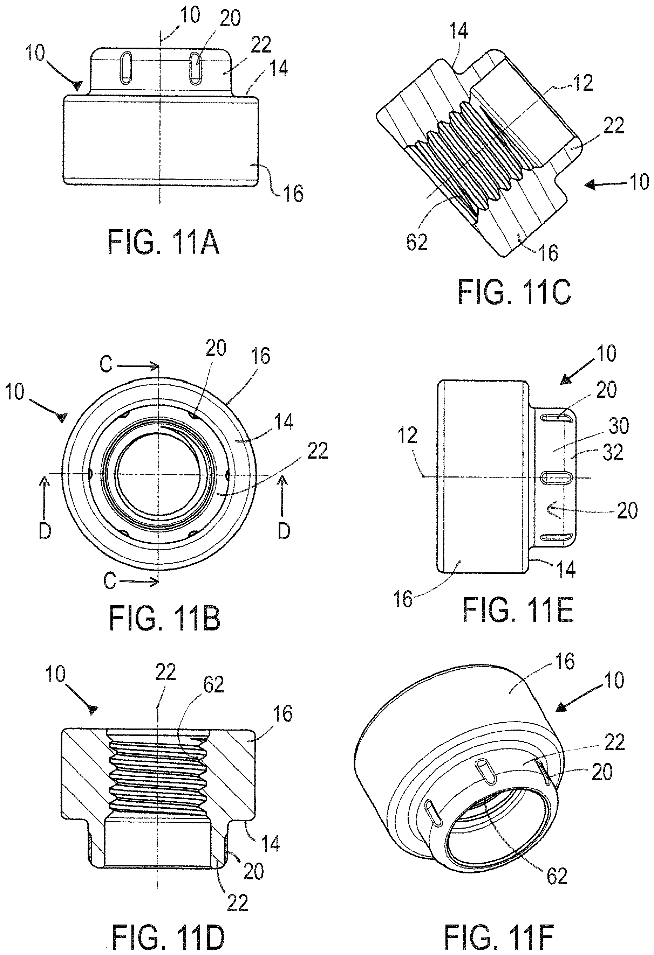

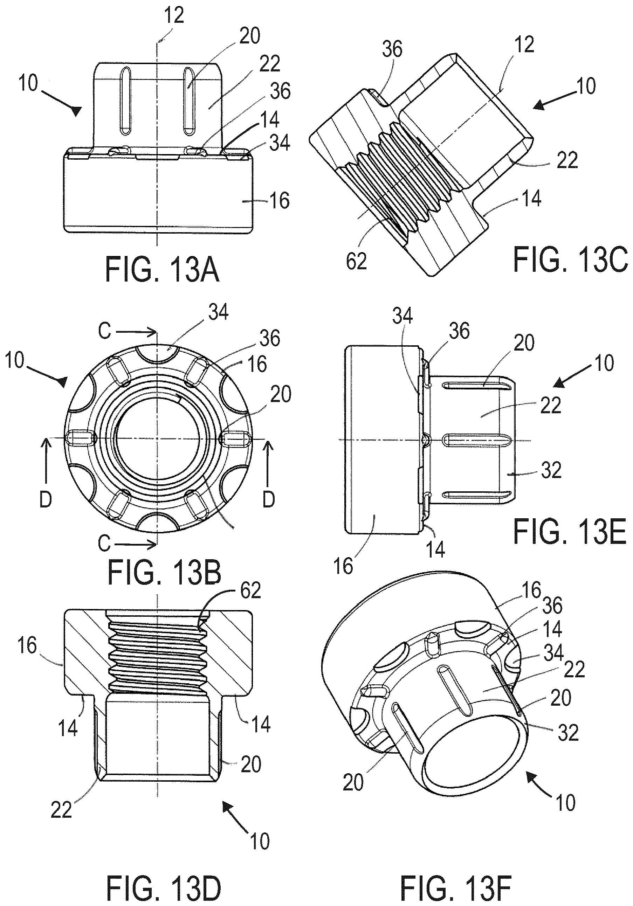

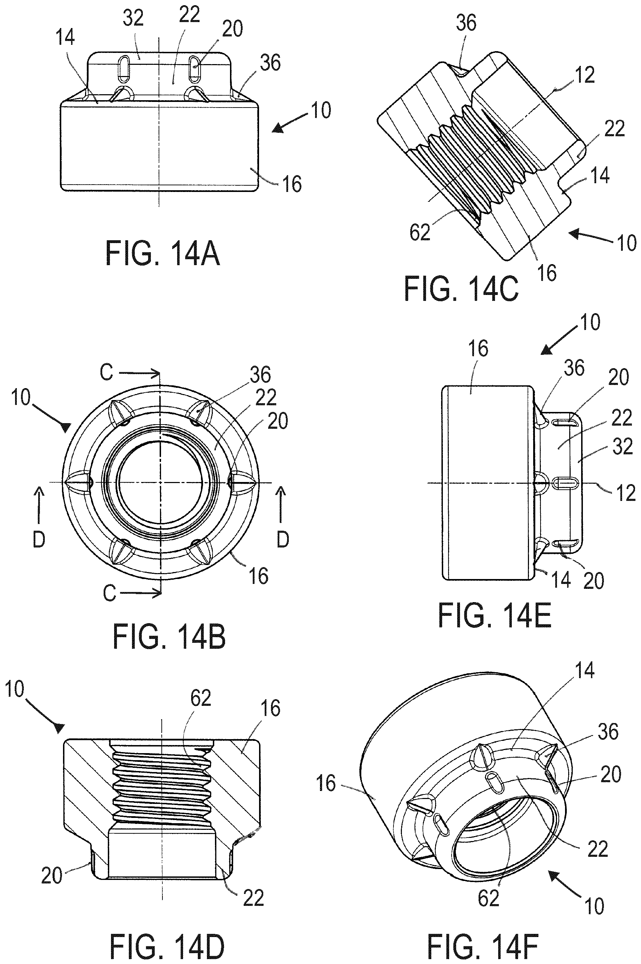

- Fig. 13A - 13F: Darstellungen entsprechend den Fig. 10A bis 10F, jedoch von einer Ausführungsform mit zusätzlichen Verdrehsicherungsmerkmalen im Bereich des Flansches, hier in der Form von abwechselnden Vertiefungen und Nasen, wobei die Nasen winkelmäßig an Stellen vorgesehen sind, die mit den Kerben am Nietabschnitt ausgerichtet Fig. 14A - 14F sind und die Vertiefungen jeweils zwischen zwei Kerben am Nietabschnitt angeordnet sind, Darstellungen entsprechend den Fig. 11A bis 11F, jedoch von einer Ausführungsform mit zusätzlichen Verdrehsicherungsmerkmalen im Bereich des Flansches, hier in der Form von Nasen, die winkelmäßig an Stellen vorgesehen sind, die mit den Kerben am Nietabschnitt ausgerichtet sind,
- Fig. 15A - 15E: eine Zeichnungsreihe, um die Anbringung des Nietelements ähnlich eines RSF-Nietelements gemäß den Fig. 13A - 13F an einem Blechteil zu erläutern, wobei die Ansichten entsprechend den Zeichnungen der Fig. 1A bis 1F vorgenommen sind,
- Fig. 16A - 16E: eine Zeichnungsreihe, um die Anbringung des Nietelements ähnlich eines RSN-Nietelements gemäß den Fig. 14A - 14F an einem Blechteil erläutern, wobei die Ansichten entsprechend den Zeichnungen der Fig. 1A bis 1F vorgenommen sind,
- Fig. 17A - 17F: Darstellungen einer erfindungsgemäß modifizierten RND-Nietmutter der Firma Profil Verbindungstechnik GmbH & Co. KG, wobei die Ansichten entsprechend den Zeichnungen der Fig. 1A bis 1F vorgenommen sind, und die Verdrehsicherungsbalken, die bei einer RND-Nietmutter die Ringnut an der Unterseite des Flansches überbrücken, fortgelassen sind,
- Fig. 18A - 18F: Darstellungen einer weiteren erfindungsgemäß modifizierten RND- Nietmutter der Firma Profil Verbindungstechnik GmbH & Co. KG, wobei die Ansichten entsprechend den Zeichnungen der Fig. 1A bis 1F vorgenommen sind, wobei die Verdrehsicherungsbalken, die bei einer RND-Nietmutter die Ringnut an der Unterseite des Flansches überbrücken, hier beibehalten worden sind und winkelmäßig mit den Kerben am Nietabschnitt ausgerichtet sind,
- Fig. 19A - 19E: eine Zeichnungsreihe, um die Anbringung des Nietelements ähnlich eines RND-Nietelements gemäß den Fig. 18A - 18F an einem Blechteil zu erläutern, wobei die Ansichten entsprechend den Zeichnungen der Fig. 1A bis 1F vorgenommen sind,
- Fig. 20A - 20F: Darstellungen einer erfindungsgemäß modifizierten EMF-Nietmutter der Firma Profil Verbindungstechnik GmbH & Co. KG, wobei die Ansichten entsprechend den Zeichnungen der Fig. 1A bis 1F vorgenommen sind, und die Verdrehsicherungsbalken, die bei einer RND-Nietmutter die Ringnut an der Unterseite des Flansches überbrücken, fortgelassen sind,
- Fig. 21A - 21 F: Darstellungen einer weiteren erfindungsgemäß modifizierten EMF-Nietmutter der Firma Profil Verbindungstechnik GmbH & Co. KG, wobei die Ansichten entsprechend den Zeichnungen der Fig. 1A bis 1F vorgenommen sind, wobei die Verdrehsicherungsbalken, die bei einer EMF-Nietmutter die Ringnut an der Unterseite des Flansches überbrücken, hier beibehalten worden sind und winkelmäßig mit den Kerben am Nietabschnitt ausgerichtet sind,

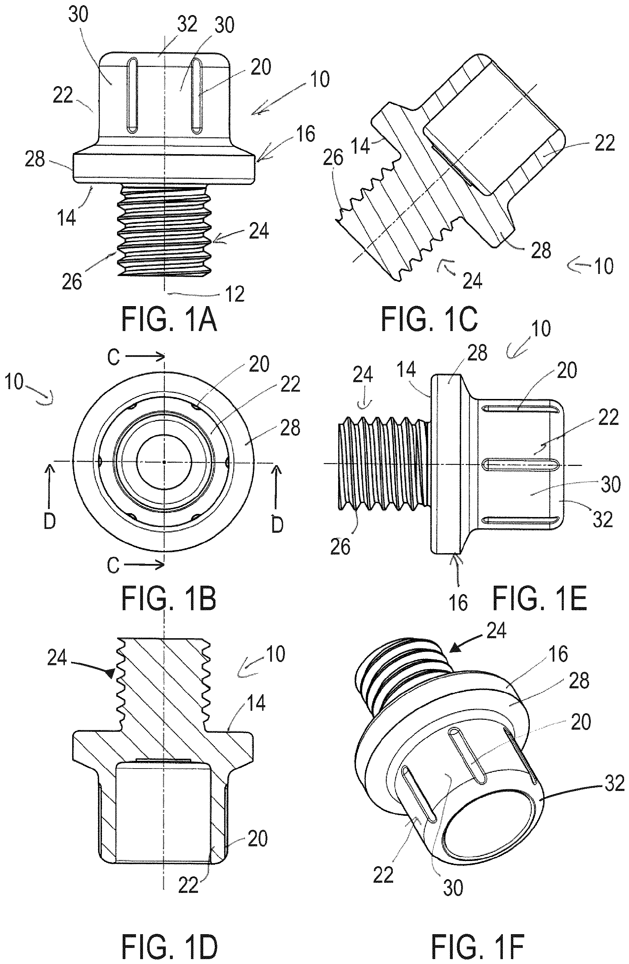

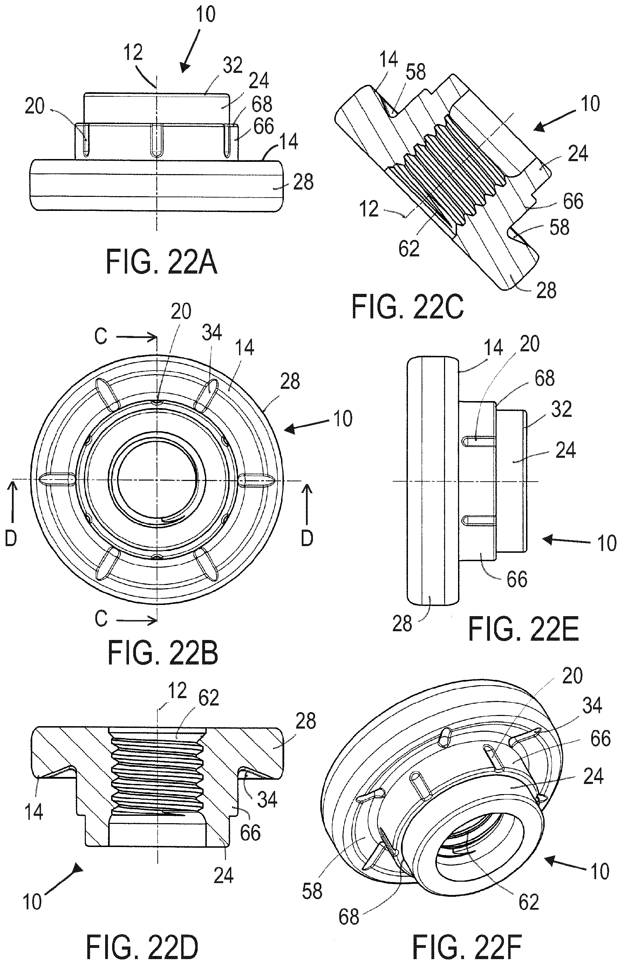

- Fig. 22A - 22F: Darstellungen einer noch weiteren erfindungsgemäß modifizierten EMF-Nietmutter der Firma Profil Verbindungstechnik GmbH & Co. KG, wobei die Ansichten entsprechend den Zeichnungen der Fig. 1A bis 1F vorgenommen sind, wobei die Verdrehsicherungsbalken, die bei einer EMF-Nietmutter die Ringnut an der Unterseite des Flansches überbrücken, hier fortgelassen sind und stattdessen sich in radialer Richtung erstreckende Nuten bzw. Vertiefungen in der Seite der Ringnut an der Unterseite des Flansches vorgesehen sind und zwar je an einer Stelle die winkelmäßig zwischen zwei benachbarten Kerben liegen,

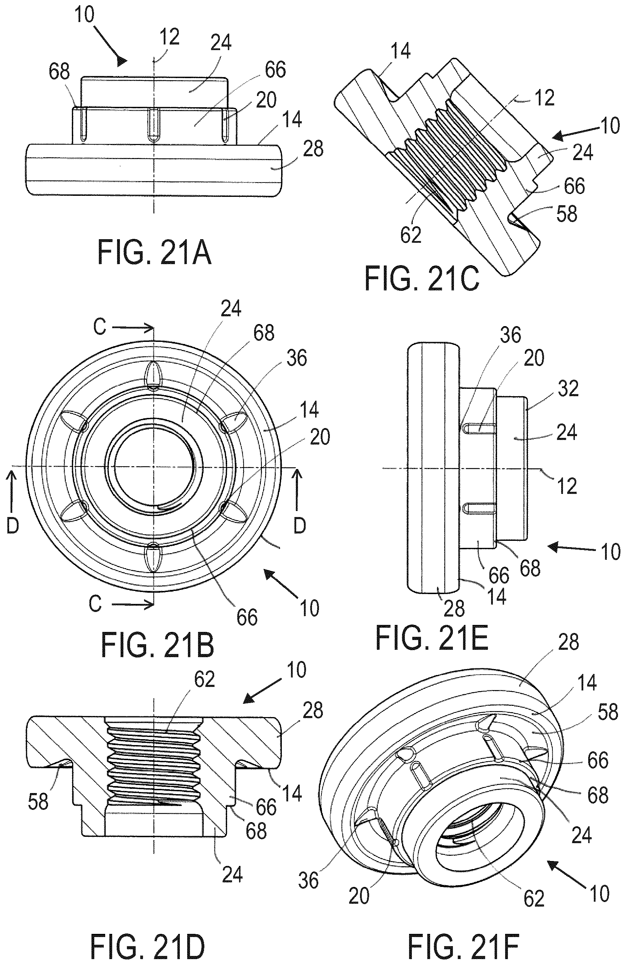

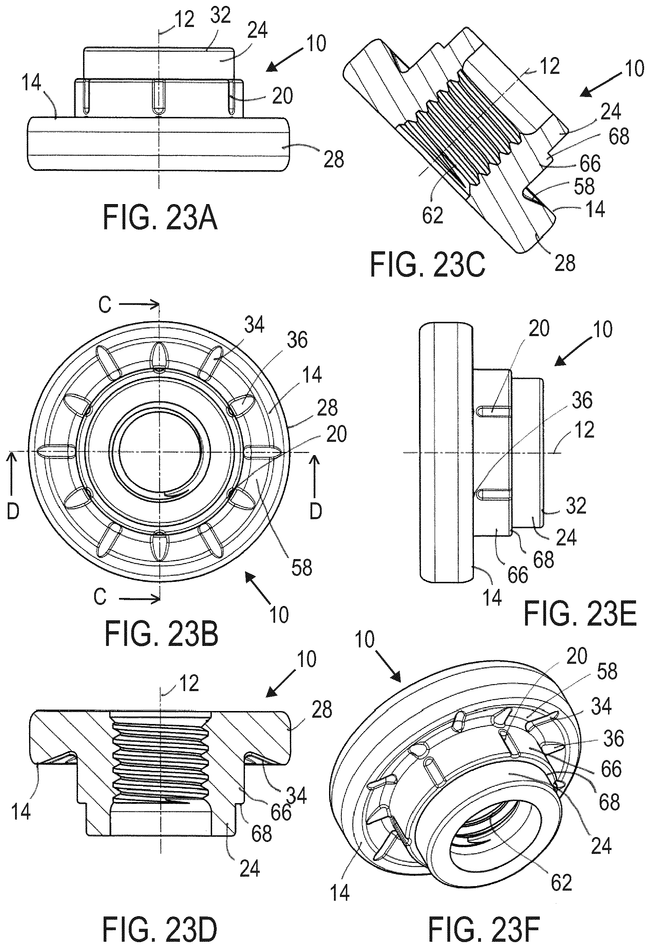

- Fig. 23A - 23F: Darstellungen einer noch weiteren erfindungsgemäß modifizierten EMF-Nietmutter der Firma Profil Verbindungstechnik GmbH & Co. KG ähnlich der Ausführungsform gemäß den Fig. 21A bis 21F, wobei die Ansichten entsprechend den Zeichnungen der Fig. 1A bis 1F vorgenommen sind, wobei zusätzlich zu den Verdrehsicherungsbalken, die bei einer EMF-Nietmutter die Ringnut an der Unterseite des Flansches überbrücken, sich in radialer Richtung erstreckende Nuten bzw. Vertiefungen in der Seite der Ringnut an der Unterseite des Flansches vorgesehen sind und zwar je an einer Stelle, die winkelmäßig zwischen zwei benachbarten Kerben liegen,
- Fig. 24A -: 24E eine Zeichnungsreihe, um die Anbringung des Nietelements ähnlich einer EMF-Nietmutter gemäß den Fig. 21A - 21F an einem Blechteil erläutern, wobei die Ansichten entsprechend den Zeichnungen der Fig. 1A bis 1F vorgenommen sind.

In allen Ausführungsformen werden für Teile, die die gleiche Formgebung oder die gleiche Funktion haben, die gleichen Bezugszeichen verwendet und es versteht sich, dass die Beschreibung auch für andere Ausführungsformen entsprechend zu verstehen ist, d.h. gilt, bei denen die gleichen Bezugszeichen verwendet sind.

Da die einzelnen Ausführungsformen der Erfindung sehr viele Gemeinsamkeiten aufweisen und die Kurzbeschreibung der einzelnen Figuren viele Informationen über die einzelnen Ausführungsformen enthält, werden zunächst die Ausführungen gemäß den Fig. 1 bis 4 im Detail beschrieben und anschließend die weiteren Ausführungen nur in wichtigen Punkten beschrieben, die nicht aus der Verwendung der gleichen Bezugszeichen oder aus der Kurzbeschreibung der Figuren hervorgehen.

Die Fig. 1 zeigt ein Nietelement 10, hier in der Form eines Bolzenelements mit einer mittleren Längsrichtung 12, mit einem eine Blechanlagefläche 14 aufweisenden Kopfteil 16 und mit einem Verdrehsicherungsmerkmale 20 aufweisenden zylindrischen Nietabschnitt 22. In dieser Ausführung weist das Bolzenelement ferner einen Schaftteil 24 auf, das mit einem Gewindezylinder 26 versehen ist. Der Schaftteil 24 könnte aber andere Formen haben, es kann sich zum Beispiel um eine Zylinderfläche zur drehbaren Lagerung eines Bauteils, oder um einen Zylinder mit einer oder mehreren Ringnuten zur Aufnahme eines Klips oder ein Schaftteil mit einer Tannenbaum- oder Hakenform zur Aufnahme einer Teppichöse handeln.

Der Schaftteil 24 erstreckt sich in einer axialen Richtung vom Flansch 28 des Kopfteils 16 weg, während sich der Nietabschnitt 22 in der entgegengesetzten axialen Richtung von der anderen Seite des Flansches weg erstreckt.

Die Verdrehsicherungsmerkmale 20 sind durch parallel zur mittleren Längsrichtung 12 verlaufende Kerben an der äußeren Mantelfläche 30 des zylindrischen Nietabschnitts 22 gebildet.

Hierdurch wird erfindungsgemäß, ohne dass weitere Verdrehsicherungsmerkmale vorgesehen sind, ein Verdrehsicherungswiderstand erreicht, der um mindestens 20% höher liegt als bei einem entsprechenden SBF-Nietelement mit herkömmlichen Verdrehsicherungsmerkmalen im Bereich der Blechanlagefläche 14 des Flansches 28.

Die Kerben 20 erstrecken sich hier vorzugsweise über zumindest im Wesentlichen die gesamte Länge des Nietabschnitts 22. Sie laufen hier in einem gerundeten Bereich 32 des Nietabschnitts 22 am freien Ende des Nietabschnitts 22 aus, der eine übliche gerundete Ziehkante darstellt. Die Kerben 20 weisen hier eine im Querschnitt gerundete Form auf, die einem halbkreisförmigen Querschnitt entspricht, wie in Fig. 1B ersichtlich.

Man merkt, dass der zylindrische Nietabschnitt 22 in den Bereichen zwischen den Kerben 20 eine kreisrunde teilzylindrische Fläche aufweist. Das Nietelement kann wie üblich durch ein Kaltschlagverfahren hergestellt werden.

Aufgrund der erfindungsgemäß erreichbaren Verdrehsicherungswerte ist es nicht erforderlich weitere Verdrehsicherungsmerkmale an der Blechanlagefläche 14 vorzusehen, was die Herstellung des Nietelements vereinfacht und letztlich auch die Kosten des entsprechenden Zusammenbauteils 70 (c.f. z.B. Fig. 4B to 4F) senkt.

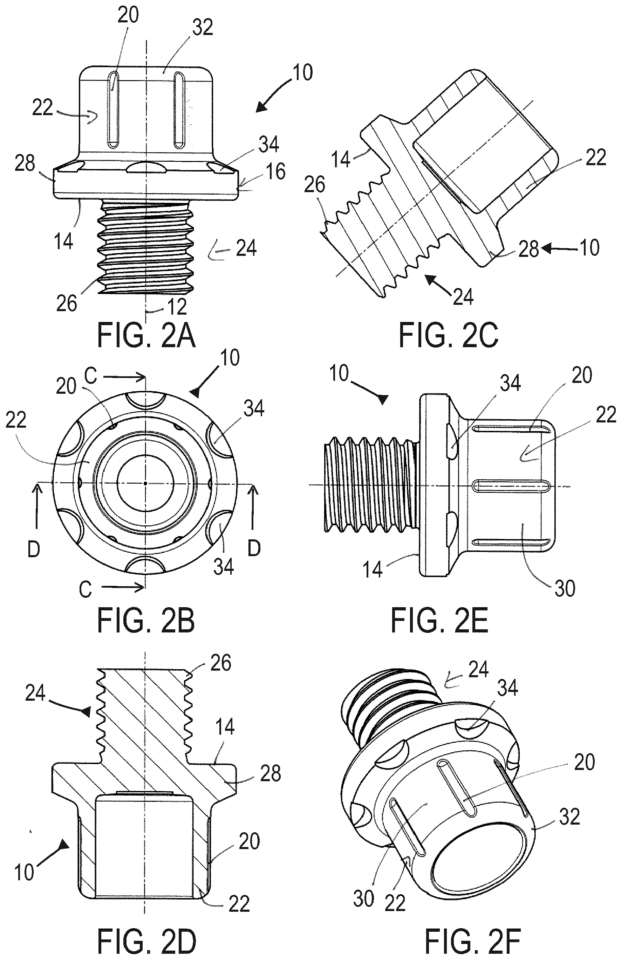

Wie in den Fig. 2A bis 2F dargestellt, können an der Blechanlagefläche 14 Verdrehsicherungsvertiefungen 34, insbesondere in etwa mit der Form einer nach außen gerichteten halbkreisförmigen Vertiefung vorgesehen werden, die an Winkelstellungen um die mittlere Längsachse 12 herum angeordnet sind, die jeweils zwischen zwei benachbarten Kerben 20 liegen. Hierdurch kann eine zusätzliche Verdrehsicherung erzielt werden.

Ferner besteht die Möglichkeit, die in den Fig. 3A bis 3F gezeigt ist, an der Blechanlagefläche 12 Verdrehsicherungsnasen 36, insbesondere sich in radialer Richtung erstreckende Nasen, vorzusehen, die an Winkelstellungen entsprechend den Winkelstellungen der Kerben 20 angeordnet sind, d.h. mit diesen ausgerichtet sind. Hierdurch kann der Verdrehsicherungswiderstand weiter gesteigert werden.

Die Anbringung des Nietbolzens an ein Blechteil 40 ist in den Fig. 4A bis 4E dargestellt, hier mit zusätzlicher Verdrehsicherung durch die Verdrehsicherungsvertiefungen 34 und Verdrehsicherungsnasen 36 gemäß den Fig. 3A bis 3F. In der Fig. 4C werden keine Bezugszeichen eingesetzt, da diese Figur die Fig. 4B in einem kleineren Maßstab darstellt und lediglich zur Darlegung der Schnittebene Y-Y gezeigt ist, wobei die entsprechende Schnittzeichnung in Fig. 4E gezeigt ist. Hieraus erkennt man, dass die Verdrehsicherungsnase 36 das Blechmaterial eindellt (Eindellung 42) und dass eine entsprechende Erhebung 44 im Blechmaterial die der Nase 36 gegenüberliegende Kerbe 20 zumindest lokal ausfüllt. Hierdurch wird das Blechmaterial im Bereich der Nasen wellenförmig verformt, was auch den Verdrehsicherungswiderstand erhöht und zwar ohne das Blechmaterial örtlich in unzulässigem Umfang zu verdünnen, da das von den Nasen verdrängte Blechmaterial in die Kerben 20 aufgenommen werden kann, die an den gleichen Winkelstellungen wie die Nasen 36 liegen.

In diesem Beispiel sind jeweils sechs Kerben 20, sechs Vertiefungen 34 und sechs Nasen 36 vorgesehen. Es ist günstig, wenn drei bis zwölf Kerben 20 vorgesehen sind, weniger als drei Kerben 20 führen nicht zu dem erwünschten Verdrehsicherungswiderstand und bei mehr als zwölf Kerben 20 müssen diese tendenziell kleiner ausgeführt werden, was sich auch nachteilig auf den Verdrehsicherungswiderstand auswirken kann. Die Anzahl der Vertiefungen 34 (falls vorgesehen) und der Nasen 36 (falls vorgesehen) entspricht der Anzahl der Kerben 20

Wie aus der Fig. 4A hervorgeht, wird das Blechteil 40 vor Anbringung des Nietelements mit einer Sicke 46 versehen, die in der Mitte bei 48 vorgelocht ist. Die Sicke 46 und die Vorlochung 48 können in an sich bekannter Weise in einem einfachen Stanzschritt gleichzeitig ausgebildet werden. Das Nietelement 10 wird so in das Blechteil 40 eingenietet, dass der Flansch des Kopfteils 16 in der Sicke angeordnet ist. Durch die Umbördelung des Nietabschnitts 22 zu dem Nietbördel 50 entsteht zwischen der Oberseite des Flansches (wie in Fig. 3A gesehen) und dem Nietbördel 50 eine U-förmige Aufnahme 52 in der der Randbereich 54 der Vorlochung 48 eingeklemmt ist. Bei der Anbringung des Nietbolzens 10 kommt ein Setzkopf (nicht gezeigt) zur Anwendung, der für sich für die Anbringung eines SBF-Bolzenelements gut bekannt ist.

Anstelle die erfindungsgemäßen Kerben 20 mit einem SBF-Bolzenelement der gezeigten Art anzuwenden, können sie auch mit einem SBF-Bolzenelements mit konusförmiger Blechanlagefläche (nicht gezeigt) verwendet werden.

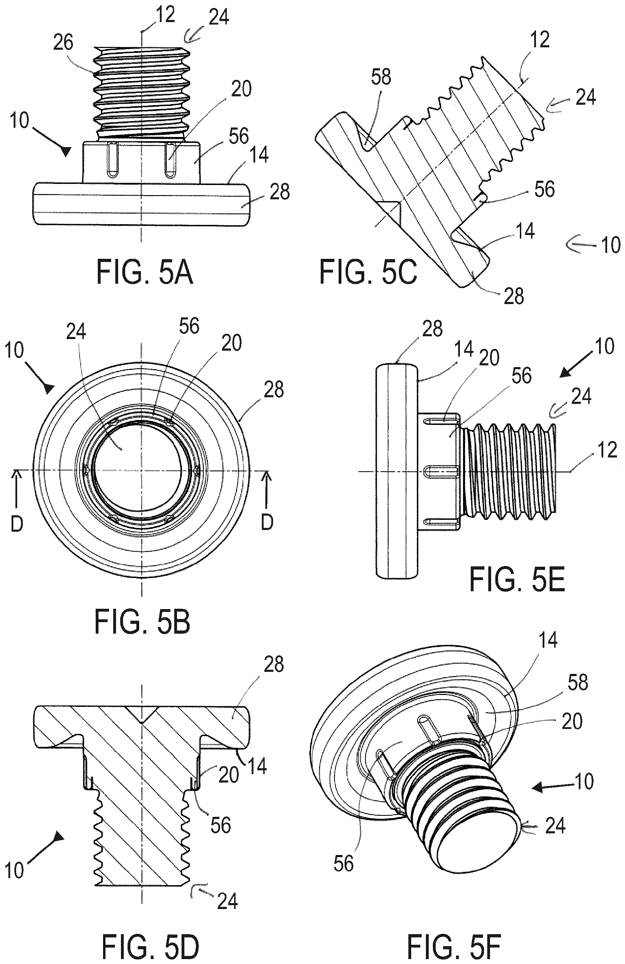

Wie aus den Fig. 5A bis 5F ersichtlich, können die erfindungsgemäßen Kerben 20 auch mit einem modifizierten NBR-Nietbolzenende 10 verwendet werden. Bei einem NBR-Bolzenelement 10 wird ein Rock 56 vorgesehen, der als Nietabschnitt 22 dient und die Kerben 20 werden auf der äußeren Seite des Rocks 56, d.h. der zylindrischen Mantelfläche des Nietabschnitts 22 vorgesehen. In der Unterseite des Flansches 28 befindet sich hier eine Ringnut 58.

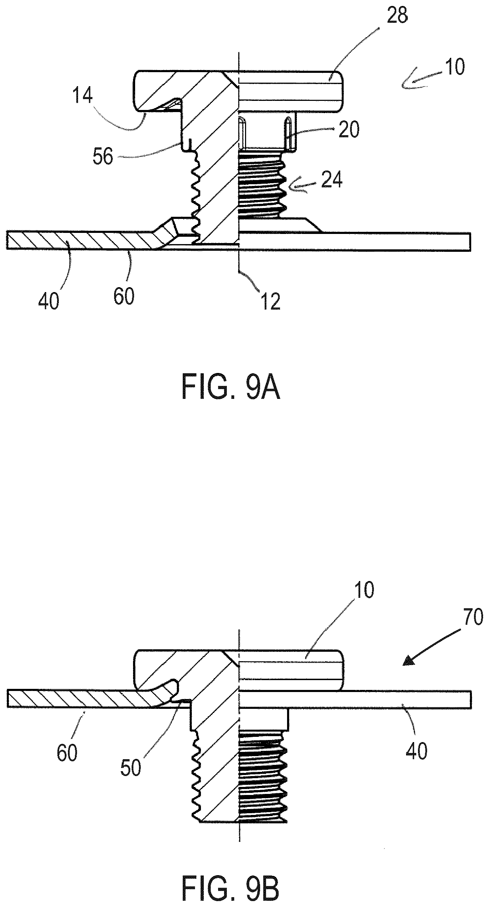

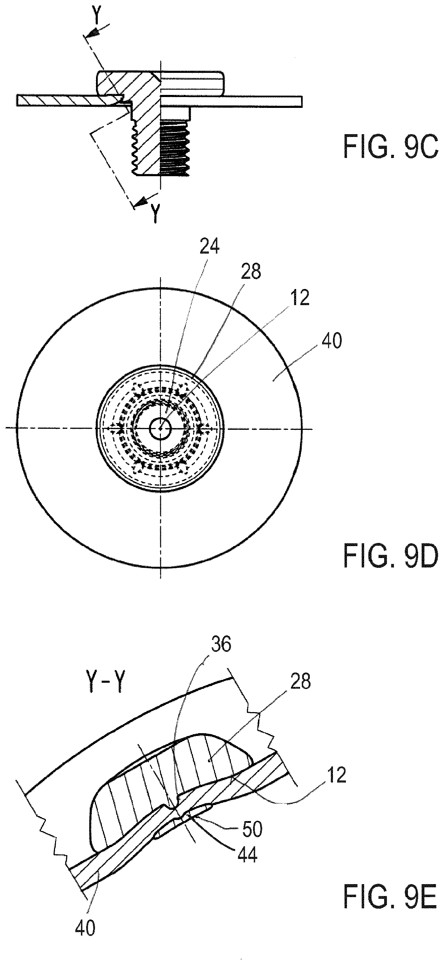

Ein bedeutender Unterschied zwischen dem Bolzenelement der Fig. 5A bis 5F und den bisherigen SBF ähnlichen Elementen besteht darin, dass hier der Nietabschnitt 22, d.h. der Rock 56 auf der gleichen Seite des Flansches 28 angeordnet ist, wie der konzentrisch zum Nietabschnitt angeordnete Schaftteil 24, hier rein beispielhaft mit Gewindezylinder 26 versehen. Die Ringnut 58 in der Blechanlagefläche bildet hier ein Teil der Blechanlagefläche und dient dazu, wie aus den Fig. 9B, 9C und 9E ersichtlich, den Nietbördel 50 aufzunehmen, so dass die Unterseite des Nietbördels 50 nicht über die Unterseite 60 des Blechteils 40 hinausragt.

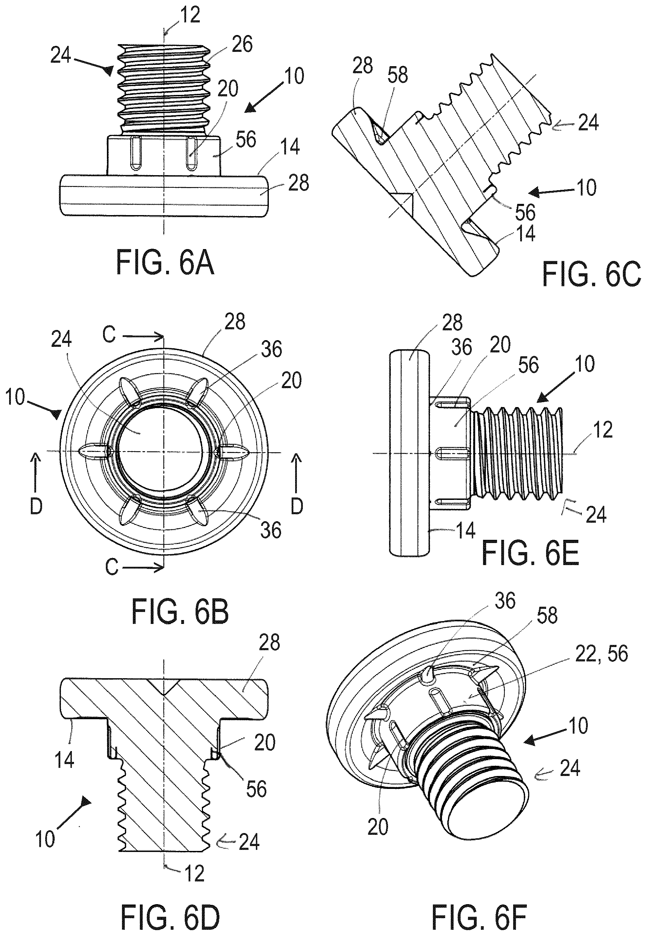

Die in den Fig. 6A bis 6F gezeigte Ausführungsform eines modifizierten NBR-Bolzenelements weist zusätzliche Verdrehsicherungsnasen 36 auf, die eine Balkenform aufweisen und die Ringnut 58 überbrücken.

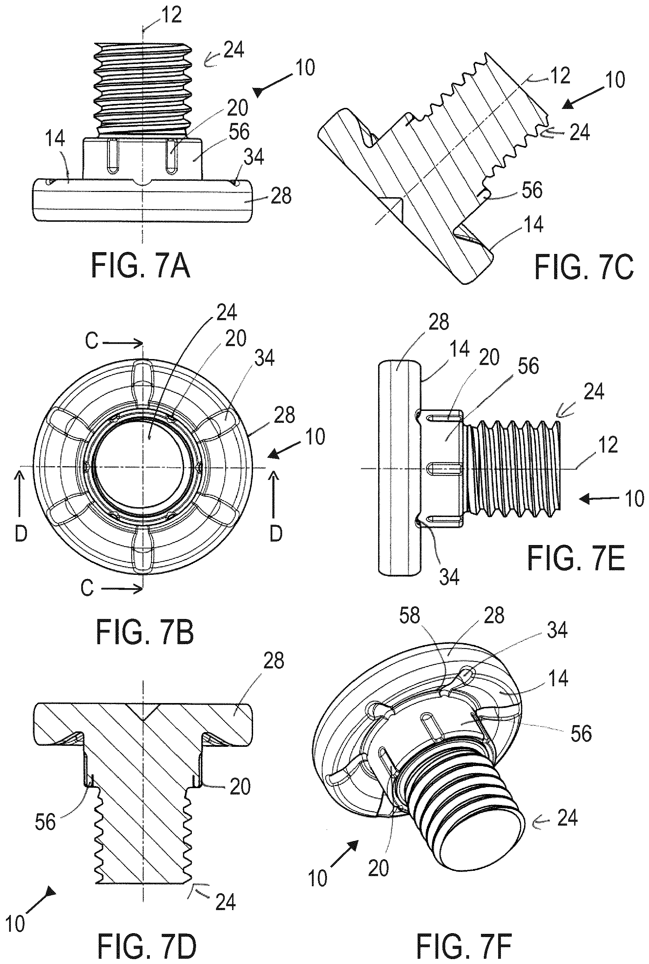

Eine weitere Alternative eines modifizierten NBR-Bolzenelements 10 ist den Fig. 7A bis 7F zu entnehmen. Hier sind Verdrehsicherungsvertiefungen 34 analog zu den Fig. 2A bis 2F in der Blechanlagefläche 12 vorgesehen.

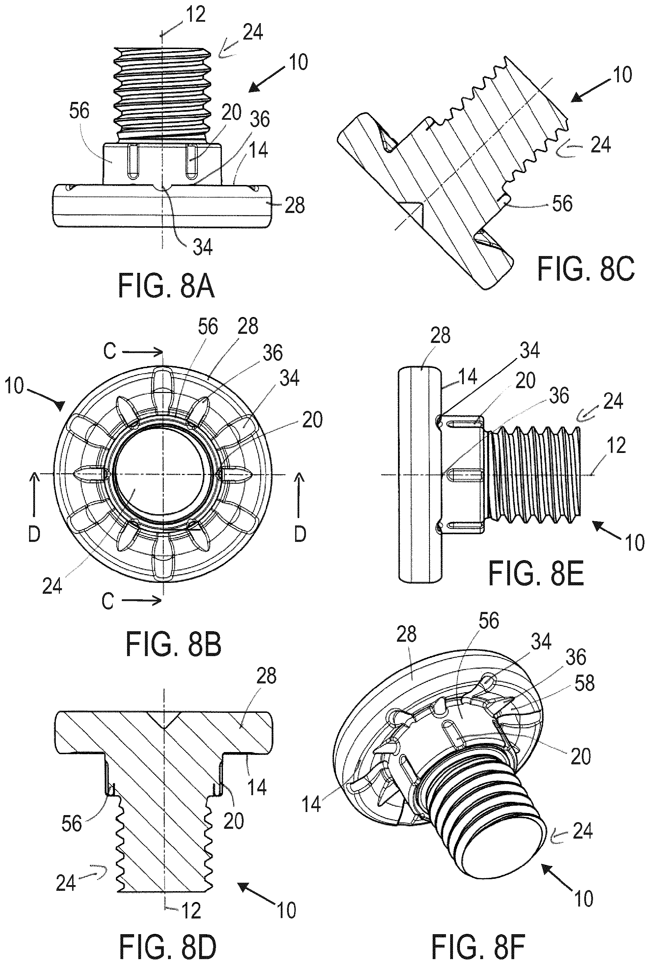

Bei der Ausführungsform gemäß den Fig. 8A bis 8F werden auch bei einem modifizierten NBR-Bolzenelement sowohl die Verdrehsicherungsnasen 36 gemäß den Fig. 6A bis 6F als auch die Verdrehsicherungsvertiefungen 34 gemäß den Fig. 7A bis 7F vorgesehen.

Der Fig. 9E ist zu entnehmen, dass auch hier einer durch eine Verdrehsicherungsnase 36 verursachten Eindellung 42 des Blechteils 40 eine Erhöhung 44 des Blechmaterials gegenübersteht, die sich in einer Kerbe 20 des Nietabschnitts bzw. des Nietbördels 50 befindet.

Die Fig. 10A bis 10F zeigen anstelle eines Nietbolzens, wie bisher beschrieben, eine Nietmutter in der Form eines modifizierten RSF-Nietelements. Bei einer Nietmutter wird üblicherweise eine mittlere Gewindebohrung 62 im Kopfteil 16 vorgesehen. Der Kopfteil 16 bildet die Blechanlagefläche 14. Bei dieser Ausführung sind die erfindungsgemäß vorgesehenen Kerben 20 wie bisher am Nietabschnitt 22 vorgesehen, der von der Blechanlagefläche 14 ausgeht. An der Blechanlagefläche 12 befinden sich in Abwandelung eines herkömmlichen RSN-Elements keine Verdrehsicherungsmerkmale.

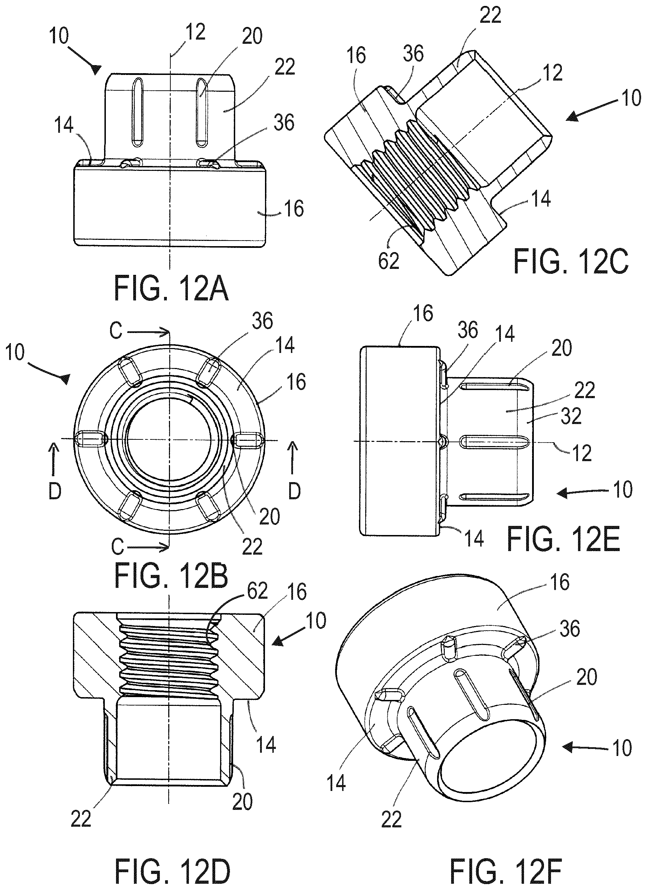

Die Fig. 11A bis 11F zeigen ein modifiziertes Nietelement in Form eines RSN-Nietelements 10, das dem modifizierten RSF-Nietelement der Fig. 10A bis 10F sehr ähnlich ist. Im Grunde genommen ist lediglich der Nietabschnitt 22 des Nietelements 10 kürzer als bei einem RSF-Nietelement.
In einer weiteren Ausführungsform eines RSF-Elements gemäß den Fig. 12A bis 12F sind Verdrehsicherungsnasen 36 an der Blechanlagefläche 14 vorgesehen, die winkelmäßig mit den Kerben 20 am Nietabschnitt 22 ausgerichtet sind.

Bei der Ausführung gemäß den Fig. 13A bis 13F sind sowohl Verdrehsicherungsvertiefungen 34 als auch Verdrehsicherungsnasen 36 an der Blechanlagefläche 14 vorgesehen.

Die Fig. 14A bis 14F zeigen eine modifizierte Form eines RSN-Elements ähnlich der Ausführungsform des RSF-Elements gemäß den Fig. 12A bis 12F mit Verdrehsicherungsnasen an der Blechanlagefläche 14. Hier haben die Verdrehsicherungsnasen in Seitenansicht eine in etwa dreieckige Form.

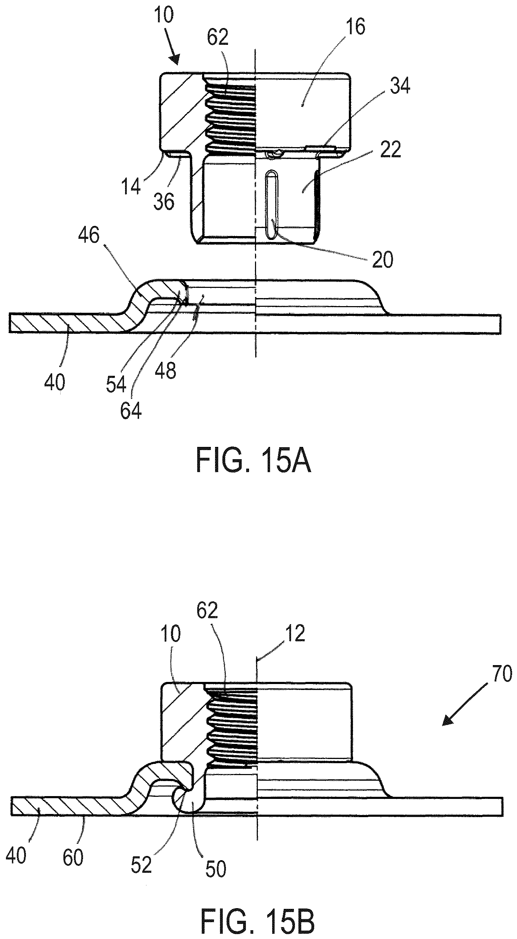

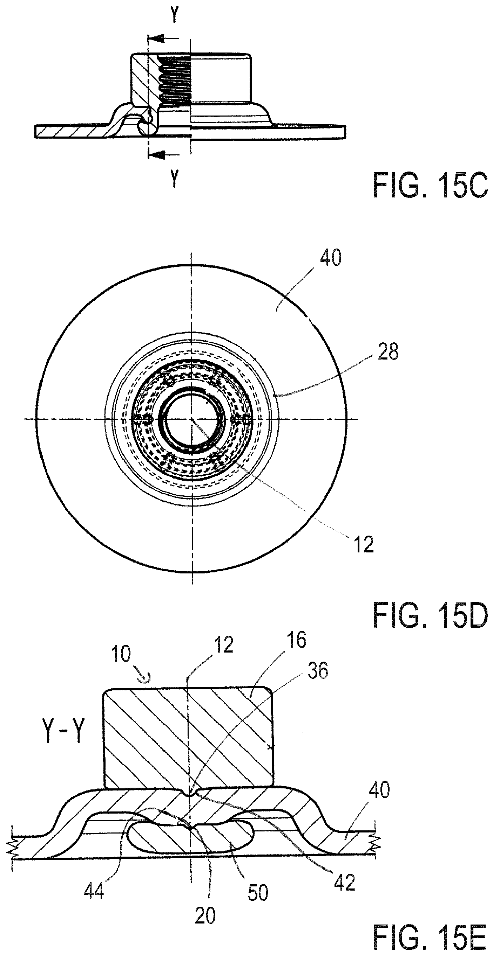

Die Fig. 15A bis 15E zeigen, wie das Nietelement der Fig. 12A bis 12F an einer eine vorgelochte Sicke 46 aufweisenden Blechteil 40 angebracht wird. Hier wird das Nietelement 10 von oben kommend in die nach oben weisende Vorlochung 48 des Blechteils 40 eingesetzt, damit der Nietbördel 50 innerhalb der ebenfalls nach oben weisenden Sicke untergebracht werden kann und nicht über die Unterseite 60 des Blechteils 40 außerhalb der Sicke 46 hinausragt.

Man merkt, dass hier die Vorlochung so vorgenommen worden ist, dass eine nach unten gerichtete Ringlippe 64 im Randbereich 54 der Vorlochung 48 entsteht. Die Ringlippe 64 und der Randbereich 54 werden hier in der U-förmigen Aufnahme 52 zwischen der Blechanlagefläche 54 und dem Nietbördel 50 eingeklemmt.

Bei dem so entstandenen Zusammenbauteil 70, wie aus der Fig. 15E ersichtlich, steht eine durch eine Verdrehsicherungsnase 36 verursachte Eindellung 42 des Blechteils 40 einer Erhöhung 44 des Blechmaterials gegenüber, die sich in einer Kerbe 20 des Nietabschnitts bzw. des Nietbördels 50 befindet.

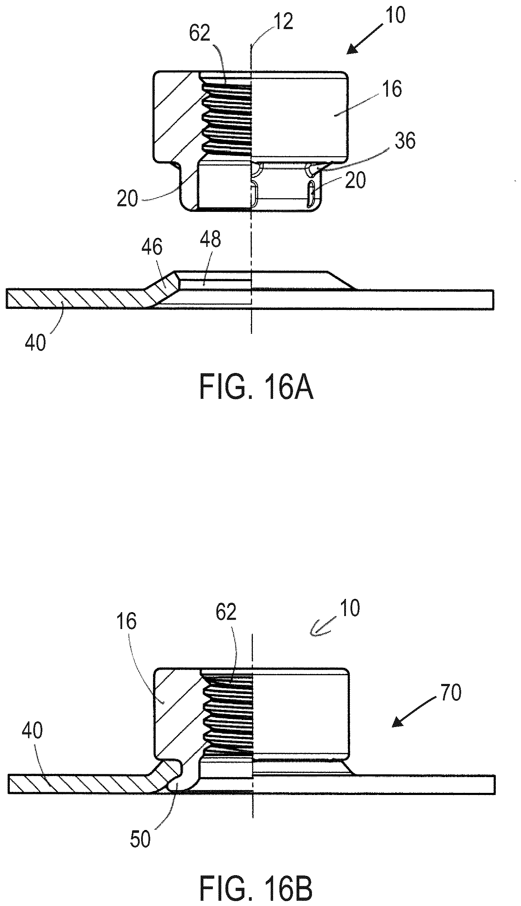

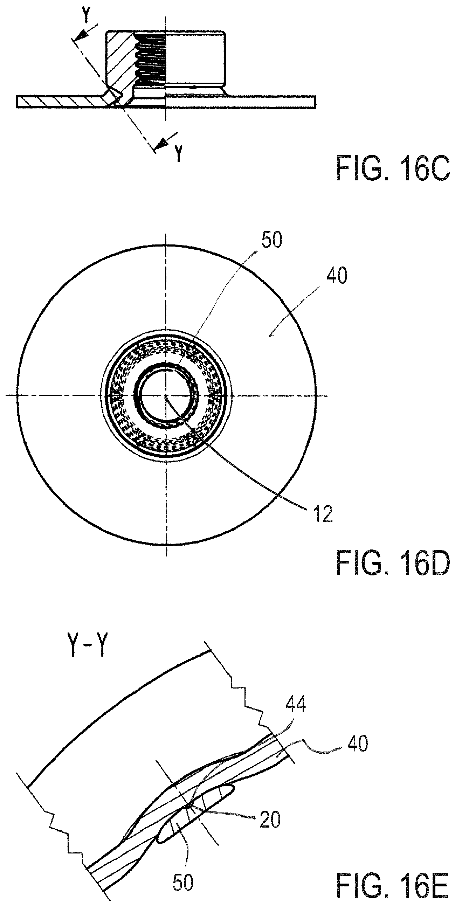

Die Fig. 16A bis 16E zeigen das Entstehen eines Zusammenbauteils 70, das durch Anbringung des modifizierten RSN-Elements 10 der Fig. 14A bis 14F hergestellt ist. Die Fig. 16A bis 16E entsprechen weitgehend den Fig. 15A bis 15E, abgesehen davon, dass das vorgelochte und vorgeformte Blechteil 40 nicht mit einer Sicke vorgesehen ist sondern so vorgeformt wird, das eine konusförmige Auswölbung entsteht. Wie aus der Fig. 16B ersichtlich, wird die konusförmige Anstellung des Blechteils entsprechend dem bekannten Klemmlochnietverfahren teilweise flach gepresst wodurch einen Würgegriff des Blechteils 40 im Randbereich 54 der Vorlochung 48 am Nietabschnitt 22 entsteht. Die so entstehenden kompressiven Spannungen schützen das Zusammenbauteil 70 vor Ermüdungsrissen und sorgen darüber hinaus dafür, dass das Blechmaterial in die Kerben 20 hineinfließt.

Der Fig. 16E ist zu entnehmen, dass auch hier eine durch eine Verdrehsicherungsnase 36 verursachte Eindellung 42 des Blechteils 40 einer Erhöhung 44 des Blechmaterials gegenübersteht, die sich in einer Kerbe 20 des Nietabschnitts bzw. des Nietbördels 50 befindet.

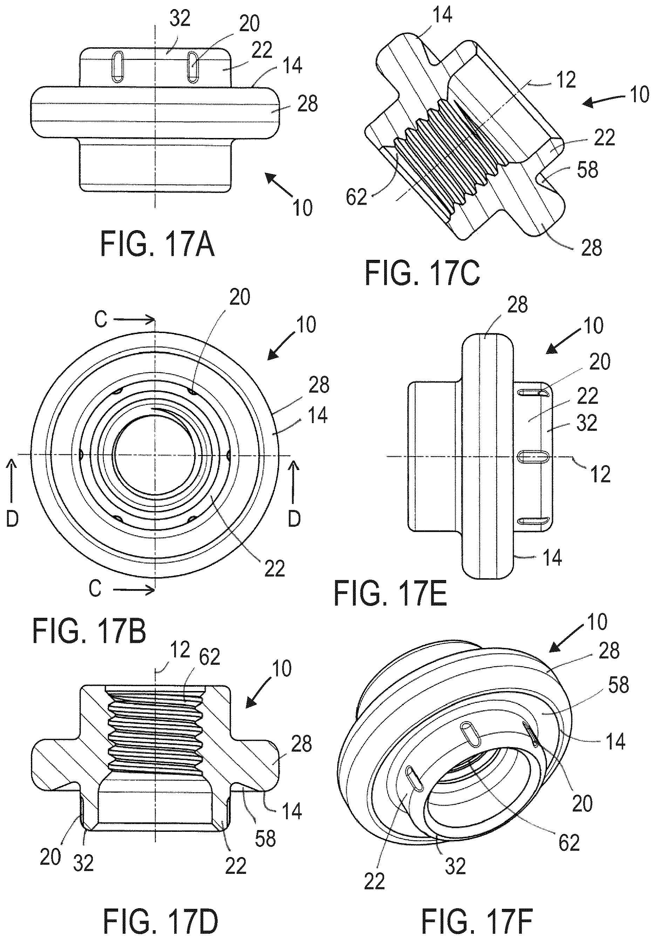

Die Fig. 17A bis 17F zeigen eine weitere Nietmutter, hier in der Form eines erfindungsgemäß modifizierten RND-Nietelements 10. Das entsprechende Element weist ähnlich des oben beschriebenen RND-Nietelements eine Ringnut 58 in der Blechanlagefläche 14 an der Unterseite des Flansches 28 auf. In dieser Ausführungsform sind die erfindungsgemäßen Kerben 20 am Nietabschnitt 22 vorgesehen. Die üblichen Verdrehsicherungsbalken eines herkömmlichen RND-Nietelements, die die Ringnut 58 überbrücken, sind aber hier nicht vorgesehen, da ausgezeichnete Verdrehsicherungswerte allein durch die Kerben 20 erreicht werden können.

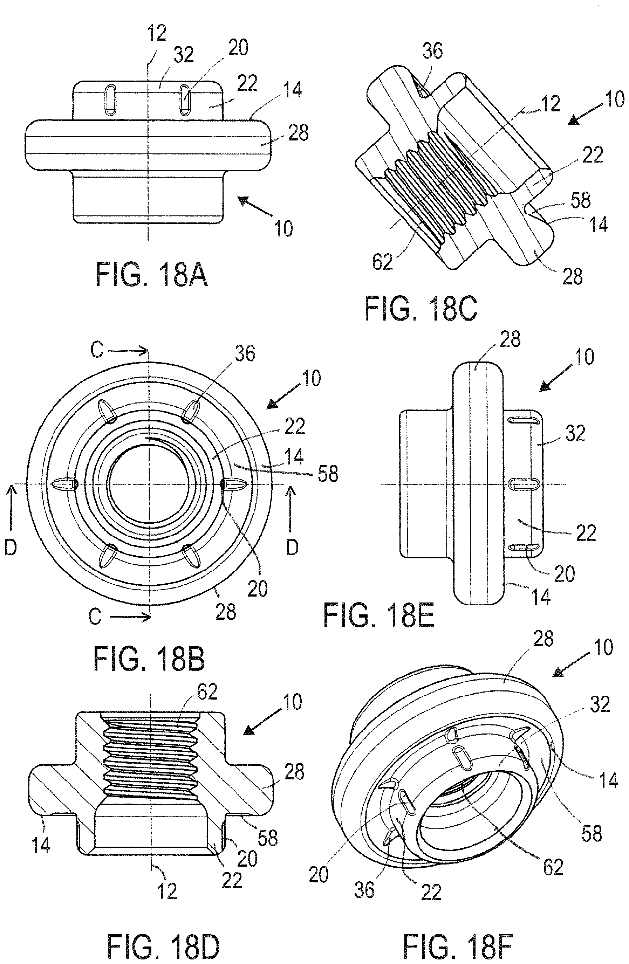

Falls erwünscht können aber noch höhere Verdrehsicherungswerte erzielt werden, wenn solche Verdrehsicherungsbalken 36 vorgesehen werden, wie in der Ausführungsform gemäß den Fig. 18A bis 18F gezeigt.

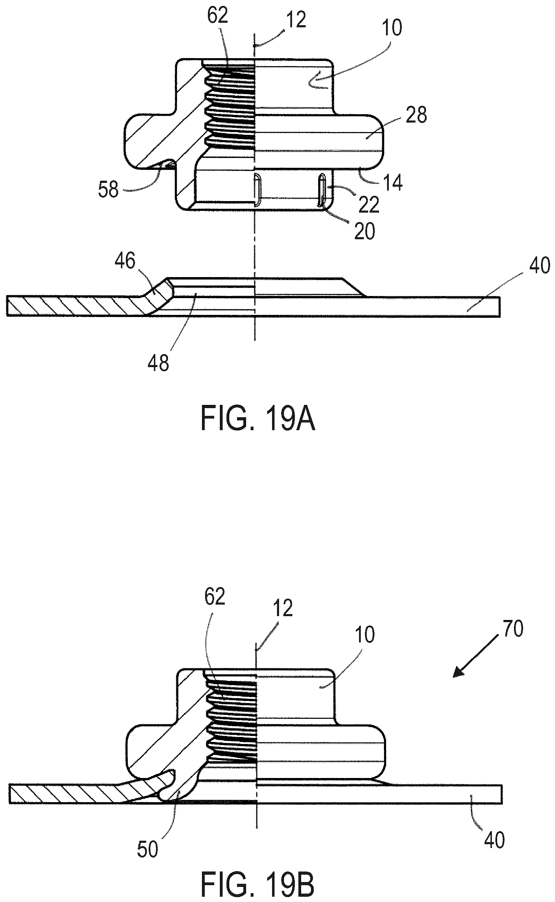

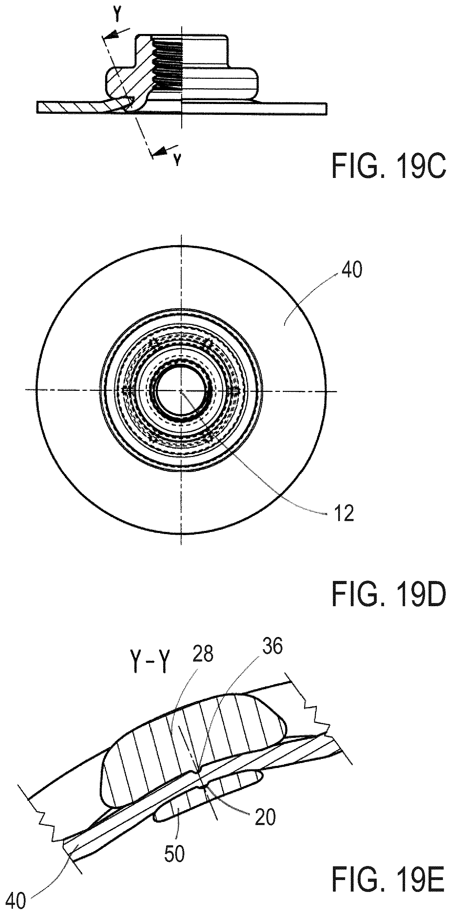

RND-Elemente werden üblicherweise unter Anwendung des oben im Zusammenhang mit den Fig. 16A bis 16E erwähnten Klemmlochnietverfahrens in eine vorgelochte konusförmige Blechanstellung an ein Blechteil angebracht, um ein Zusammenbauteil 70 zu bilden. Das Entstehen des Zusammenbauteils 70 für eine erfindungsgemäß modifizierte RND-Nietmutter gemäß den Fig. 18A bis 18F ist in den Fig. 19A bis 19E dargestellt.

Der Fig. 19E ist zu entnehmen, dass auch hier eine durch eine Verdrehsicherungsnase 36 verursachte Eindellung 42 des Blechteils 40 einer Erhöhung 44 des Blechmaterials gegenübersteht, die sich in einer Kerbe 20 des Nietabschnitts bzw. des Nietbördels 50 befindet.

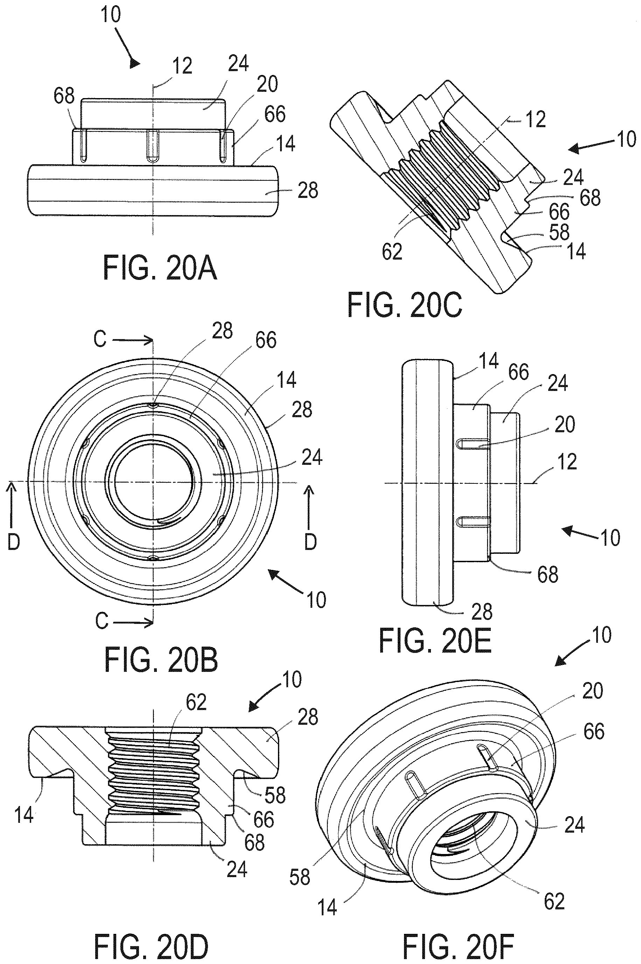

Die Fig. 20A bis 20F zeigen eine weitere Nietmutter, hier in der Form eines erfindungsgemäß modifizierten EMF-Nietelements 10. In dieser Ausführungsform sind die erfindungsgemäßen Kerben 20 am Nietabschnitt 22 vorgesehen, die üblichen Verdrehsicherungsbalken eines herkömmlichen EMF-Nietelements, die die Ringnut 58 überbrücken, sind aber hier nicht vorgesehen, da ausgezeichnete Verdrehsicherungswerte allein durch die Kerben 20 erreicht werden können.

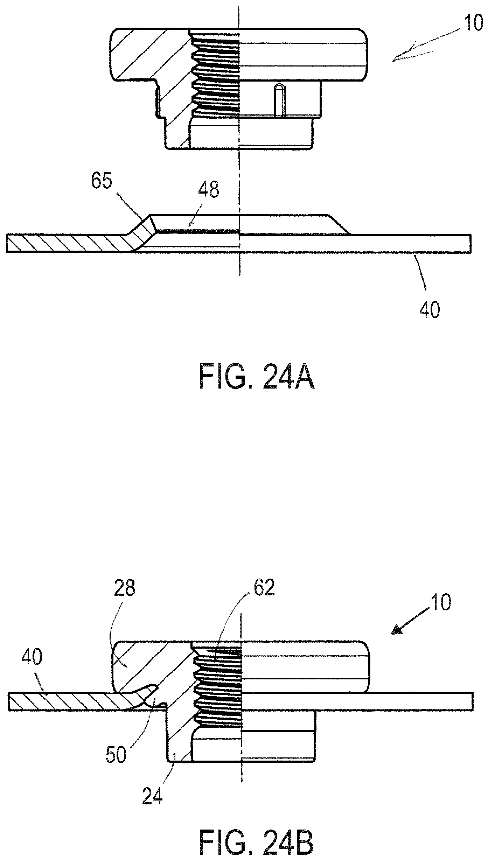

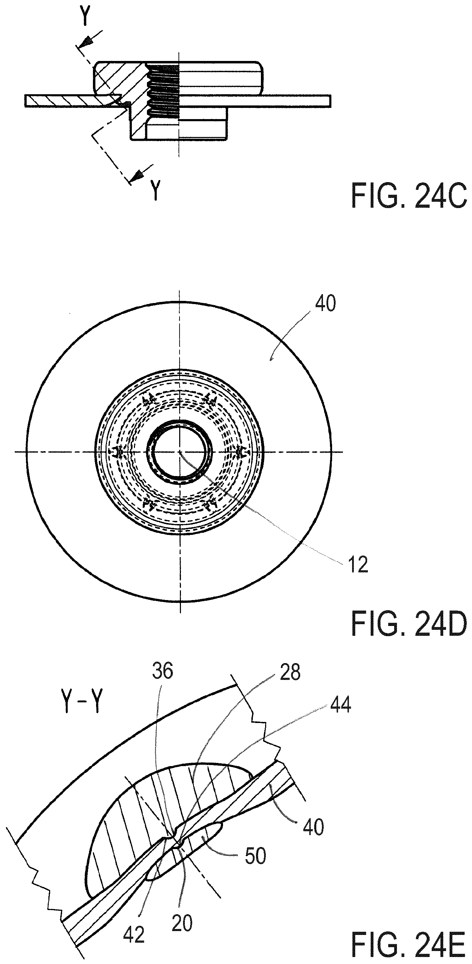

Bei einem EMF-Element ist der Nietabschnitt 22 nicht als hohler Abschnitt ausgebildet, sondern als ein Zylinderbereich 66 vergrößerten Durchmessers zu verstehen, der über eine Ringschulter 68 in den Schaftteil 24 übergeht. Bei der Anbringung an ein Blechteil wird mittels einer entsprechenden Matrize, die an die Ringschulter 68 angreift ein Nietbördel 50 aus dem Zylinder größeren Durchmessers ringförmig abgeschält bzw. gebildet, wie aus der Fig. 24B zu sehen ist, dort allerdings für das ähnliche EMF-artige Nietelement gemäß den Fig. 23A bis 23F.

Die Fig. 21A bis 21F zeigen eine weiter modifizierte Ausführungsform eines EMF-Nietelements 10. In dieser Ausführungsform sind die erfindungsgemäßen Kerben 20 am Nietabschnitt 22 ebenfalls vorgesehen, die übliche Verdrehsicherungsbalken 36 eines herkömmlichen EMF-Nietelements, die die Ringnut 58 überbrücken, sind aber hier ebenfalls vorgesehen und sorgen für noch höhere Verdrehsicherungswerte. Auch hier sind die Verdrehsicherungsbalken 36 mit den Kerben 20 winkelmäßig ausgerichtet.

Bei der Ausführungsform gemäß den Fig. 22A bis 22F werden anstelle der Verdrehsicherungsnasen bzw. -balken 36 der Ausführung gemäß den Fig. 21A bis 21F, sich in radialer Richtung erstreckende längliche Verdrehsicherungsvertiefungen 34 an der Blechanlagefläche 14 vorgesehen. Die Verdrehsicherungsvertiefungen 34 befinden sich auch an der geneigten Fläche der Ringnut 58 und sind winkelmäßig je zwischen zwei benachbarten Kerben 20 angeordnet.

Schließlich werden in der Ausführungsform gemäß den Fig. 23A bis 23F die Verdrehsicherungsbalken 34 der Ausführung gemäß den Fig. 21A bis 21F und die Verdrehsicherungsvertiefungen gemäß den fig. 22A bis 22F gleichzeitig verwendet und führen zu noch höheren Verdrehsicherungswerte.

Als letztes zeigen die Fig. 24A bis 24E wie das Nietelement 10 der Fig. 23A bis 23F an ein Blechteil 40 angebracht wird. Auch hier wird das Blechteil 40 entsprechend dem Klemmlochnietverfahren an einer vorgelochten konusförmigen Anstellung 65 des Blechteils angebracht.

Der Fig. 24E ist zu entnehmen, dass auch hier einer durch eine Verdrehsicherungsnase 36 verursachten Eindellung 42 des Blechteils 40 eine Erhöhung 44 des Blechmaterials gegenübersteht, die sich in einer Kerbe 20 des Nietabschnitts bzw. des Nietbördels 50 befindet.

Das Funktionselement kann aus dem gleichen Material bestehen, das normalerweise für Halbhohlstanznieten verwendet wird oder aus Materialien die für die Herstellung mittels Kaltverformung von Schrauben der Güteklasse 4.6 oder 8.8 (oder höher) nach DIN verwendet werden.

In allen Ausführungen erfolgt die Bewegung des Blechmaterials in die Kerben 26 bzw. 26' oder 26, 26' hinein durch Kaltverformung, die entsteht, wenn das Blechmaterial aufgrund von Kraftaufbringung an das Nietelement 10 zwischen dem Nietelement und der Matrize gequetscht wird, bzw. wenn der Nietabschnitt 22 des Nietelements10 durch die Matrize verformt wird.

### Bezugszeichenliste

- 10: Nietelement
- 12: mittlere Längsrichtung des Nietelements 10
- 14: Blechanlagefläche des Nietelements 10
- 16: Kopfteil des Nietelements 10
- 20: Kerben am Nietabschnitt 22
- 22: Nietabschnitt des Nietelements 10
- 24: Schaftteil des Nietelements 10
- 26: Gewindezylinder
- 28: Flansch des Nietelements 10
- 30: äußere Mantelfläche des zylindrischen Nietabschnitts 22
- 32: gerundeter Bereich 32 am freien Ende des Nietabschnitts 22
- 34: Verdrehsicherungsvertiefungen der Blechanlagefläche
- 36: Verdrehsicherungsnasen bzw. -balken an der Blechanlagefläche,
- 40: Blechteil
- 42: Eindellung des Blechmaterials im Bereich einer Nase 36
- 44: Erhöhung des Blechmaterials im Bereich einer Kerbe 20
- 46: Sicke 46 des Blechteils 40
- 48: Vorlochung 48 des Blechteils 40
- 50: Nietbördel
- 52: U-förmige Aufnahme für den Randbereich 54 der Vorlochung 48
- 54: Randbereich der Vorlochung 48
- 56: Rock (entspricht dem Nietabschnitt 22)
- 58: Ringnut in der Blechanlagefläche
- 60: Unterseite des Blechteils 40
- 62: Gewindebohrung des Kopfteils 16 einer Nietmutter
- 64: Ringlippe der konusförmigen Blechanstellung 65
- 65: konusförmige Blechanstellung
- 66: zylindrischer Bereich größeren Durchmessers am Schaftteil 24
- 68: Ringschulter
- 70: Zusammenbauteil

## Patentansprüche

1. Nietelement (10) mit einer mittleren Längsrichtung (12), mit einem eine Blechanlagefläche (14) aufweisenden Kopfteil (16) und mit einem Verdrehsicherungsmerkmale aufweisenden zylindrischen Nietabschnitt (22),
**dadurch gekennzeichnet, dass** die Verdrehsicherungsmerkmale durch parallel zur mittleren Längsrichtung (12) verlaufende Kerben (20) an der äußeren Mantelfläche (30) des zylindrischen Nietabschnitts (22) gebildet sind..

2. Nietelement nach Anspruch 1,
**dadurch gekennzeichnet, dass** die Kerben (20) sich über zumindest im Wesentlichen die gesamte Länge des Nietabschnitts (22) erstrecken.

3. Nietelement nach Anspruch 1 oder 2,
**dadurch gekennzeichnet, dass** die Kerben (20) eine im Querschnitt gerundete Form aufweisen, die insbesondere einem halbkreisförmigen Querschnitt entspricht.

4. Nietelement nach Anspruch 1, 2 oder 3,
**dadurch gekennzeichnet, dass** der zylindrische Nietabschnitt (22) in den Bereichen zwischen den Kerben (20) eine kreisrunde teilzylindrische Fläche (30) aufweist.

5. Nietelement nach einem der vorherigen Ansprüche,
**dadurch gekennzeichnet, dass** an der Blechanlagefläche (14) keine Verdrehsicherungsmerkmale vorgesehen sind.

6. Nietelement nach einem der vorhergehenden Ansprüche 1 bis 4,
**dadurch gekennzeichnet, dass** an der Blechanlagefläche (14) Verdrehsicherungsvertiefungen (34), insbesondere in etwa mit der Form einer nach außen gerichteten halbkreisförmigen Vertiefung vorgesehen sind, die an Winkelstellungen um die mittlere Längsachse herum angeordnet sind, die jeweils zwischen zwei benachbarten Kerben (20) liegen.

7. Nietelement nach einem der vorhergehenden Ansprüche 1 bis 4 oder 6, **dadurch gekennzeichnet, dass** an der Blechanlagefläche (14) Verdrehsicherungsnasen (36), insbesondere sich in radialer Richtung erstreckende Nasen vorgesehen sind, die an Winkelstellungen entsprechend den Winkelstellungen der Kerben (20) angeordnet sind, d.h. mit diesen ausgerichtet sind.

8. Nietelement nach einem der vorhergehenden Ansprüche,
**dadurch gekennzeichnet, dass** drei bis zwölf Kerben (20) vorgesehen sind.

9. Nietelement nach einem der vorhergehenden Ansprüche,
**dadurch gekennzeichnet, dass** es sich um ein Bolzenelement handelt, zum Beispiel nach Art eines SBF-Elements, eines SBF-Elements mit konusförmiger Blechanlagefläche oder eines NBR-Nietbolzens, die alle von Profilverbindungstechnik GmbH & Co. KG erhältlich sind.

10. Nietelement nach einem der vorhergehenden Ansprüche,
**dadurch gekennzeichnet, dass** es sich um ein Mutterelement handelt, zum Beispiel nach Art eines RSF-Elements, eines RSN-Elements, eines RND-Elements oder eines EMF-Elements, die alle von Profilverbindungstechnik GmbH & Co. KG erhältlich sind.

11. Zusammenbauteil (70) bestehend aus einem Blechteil (40) an dem mindestens ein Nietelement (10) gemäß einem der vorhergehenden Ansprüche angenietet ist,
**dadurch gekennzeichnet, dass** Blechmaterial an der Blechanlagefläche (14) anliegt und sich im Eingriff mit den Kerben (20) befindet.

12. Zusammenbauteil nach Anspruch 10 und nach Anspruch 6,
**dadurch gekennzeichnet, dass** Blechmaterial an der Blechanlagefläche (14) sich in Eingriff mit den Vertiefungen (34) befindet.

13. Zusammenbauteil nach Anspruch 10 und nach Anspruch 7,
**dadurch gekennzeichnet, dass** Blechmaterial an der Blechanlagefläche (14) sich in Eingriff mit den Nasen (36) befindet.

14. Zusammenbauteil nach Anspruch 13,
**dadurch gekennzeichnet, dass** Blechmaterial an der Blechanlagefläche (14) wellenförmig über die Verdrehsicherungsnasen (36) und in die Verdrehsicherungsvertiefungen (34) verläuft.

15. Zusammenbauteil nach Anspruch 13 oder 14
**dadurch gekennzeichnet, dass** Blechmaterial an der Blechanlagefläche (14) im Eingriffsbereich mit den Nasen (36) nicht oder nur unwesentlich eingeschnitten wird, da es sich gleichzeitig in Eingriff mit den Kerben (20) befindet.
